# EUROPÄISCHE PATENTSCHRIFT

(11) **EP 1 230 040 B1**
(45) Veröffentlichungstag und Bekanntmachung des Hinweises auf die Patenterteilung: **20.12.2006**
(21) Anmeldenummer: 00972876.7
(22) Anmeldetag: 27.10.2000
(51) Int. Cl.: B05D 7/00

(54) **SUBSTRAT MIT EINEM ABRIEBFESTEN DIFFUSIONSSPERRSCHICHTSYSTEM**
SUBSTRATE COMPRISING AN ABRASION-RESISTANT DIFFUSION BARRIER LAYER SYSTEM
SUBSTRAT COMPORTANT UN SYSTEME DE COUCHE D'ARRET DE DIFFUSION RESISTANT A L'ABRASION

(30) Priorität: 28.10.1999 DE 19952040
(43) Veröffentlichungstag der Anmeldung: 14.08.2002
(73) Patentinhaber: Leibniz-Institut für Neue Materialien gemeinnützige GmbH, 66123 Saarbrücken (DE)
(72) Erfinder: MENNIG, Martin, 66287 Quierschied (DE); OLIVEIRA, Peter, W., 66111 Saarbrücken (DE); SCHMIDT, Helmut, 66130 Saarbrücken-Güdingen (DE)
(74) Vertreter: Barz, Peter
(86) Internationale Anmeldenummer: PCT/EP2000/010589
(87) Internationale Veröffentlichungsnummer: WO 2001/030922

(56) Entgegenhaltungen:
- WO-A-95/13249
- WO-A-98/45502
- DE-A- 19 823 732
- DE-A- 19 857 316
- DE-A- 19 857 317

## Beschreibung

Die vorliegende Erfindung betrifft ein mit einem abriebfesten Diffusionssperrschichtsystem versehenes Kunststoffsubstrat, bei dem das Beschichtungssystem eine harte Grundschicht und mindestens eine Deckschicht umfaßt, sowie ein Verfahren zur Herstellung des mit einem abriebfesten Diffusionssperrschichtsystem versehenen Substrats.

Die Beschichtung von Substraten mit Schichten mit besonderen physikalischen Eigenschaften, wie z.B. hohem Brechwert, hoher Abriebfestigkeit, einem Schutz vor dem Eindiffundieren von Substanzen, z.B. Gasen aus der Atmosphäre oder Wasser, ist insbesondere bei Substraten, die thermisch nicht belastet werden können, ein großes Problem, da eine hermetische Abdichtung ohne eine thermische Verdichtung zu rein anorganischen Schichten äußerst schwierig zu erreichen ist. Selbst bei aufgesputterten Schichten ist die Defekthäufigkeit und die pin-hole-Häufigkeit so groß, daß von einer hermetischen Abdichtung nicht gesprochen werden kann. In vielen Fällen reichen jedoch solche Schichten aus, d.h. es wird zwar keine hermetische Abdichtung erreicht, aber es wird eine ausreichend feste Oberfläche erhalten.

Anderseits führen naßchemisch erhaltene Beschichtungen, bei denen aus einer Lösungsmittelphase beschichtet wird, zu in der Regel sehr offenen Strukturen (Polymere mit hohen freien Volumina), wobei bei Teilchen enthaltenden Systemen mit Zwickeln zu rechnen ist, durch die Gasdiffusion und Stofftransportaustausch erfolgen können. Daher ist es auch nicht möglich, mit solchen Systemen ohne eine Verdichtung bei hohen Temperaturen eine gute Abdichtung zu erhalten.

Selbst anorganisch-organische Kompositsysteme sind nicht in der Lage, ohne zusätzliche anorganische Sputterschichten ausreichend abzudichten. Die Abriebfestigkeit solcher Schichten ist zwar gegenüber typischen Kunststoffen, wie PC und PMMA, deutlich erhöht, aber für viele Zwecke (z.B. Verscheibungen) nicht ausreichend.

Dünne Schichten unter 1 µm können in der Regel über Gasphasen-Abscheidungsverfahren, aber auch über Sol-Gel-Prozesse hergestellt werden. Bei Gasphasen-Abscheidungsverfahren ist es möglich, auch rein anorganische Schichten herzustellen. Rein anorganische Schichten sind, wenn sie porenfrei hergestellt werden können, auch schon in sehr dünnen Schichten hermetisch abriegelnd, d.h. Stoffe, wie Gase oder Wasser, können nicht eindiffundieren. Dies hängt mit der Dichte des Netzwerkes zusammen, das keine freien Volumina besitzt, wie dies bei organischen Polymeren der Fall ist. Außerdem weisen sie keine ausreichende Flexibilität auf, um Gasmolekülen den Durchtritt zu gewähren.

Anorganische Sol-Gel-Materialien haben nach dem Abscheidevorgang eine relativ niedrige theoretische Dichte, d.h. es liegt keine dichte Packung vor, da durch die Wechselwirkung der Solpartikel bzw. Solmoleküle eine hohe Packungsdichte verhindert wird. Die Wechselwirkungen kommen durch dipolare Wechselwirkungen und/oder Wasserstoffbrücken oder chemische Bindungen zustande und verhindern, daß eine Relaxation bei niedrigen Temperaturen stattfindet. Die typischen Packungsdichten solcher Schichten liegen zwischen 5 und 25% der theoretischen Dichte.

Während beim Auftrag solcher Schichten auf keramische und glasartige Werkstoffe durch die Anwendung hoher Temperaturen eine nachträgliche Verdichtung möglich ist, ist dies beim Auftrag auf Polymersubstrate nicht möglich. Typische Verdichtungstemperaturen von anorganischen Systemen liegen zwischen 450 und 1000°C und solche Prozesse sind daher für Polymere ungeeignet. Weiter gelingt es zwar mit den obengenannten Systemen relativ dünne Schichten auf Polymersubstraten zu erhalten, aber es ergibt sich eine außerordentlich niedrige mechanische Beständigkeit und eine geringe Kratzfestigkeit. Dies ist insbesondere für in der Optik verwendete transparente Schichten ein Problem, da dort häufig sehr dünne Schichtdicken erforderlich sind.

WO 98/45502 betrifft ein Verfahren zum Versehen einer metallischen Oberfläche mit einer glasartigen Schicht. Die dafür eingesetzte Beschichtungszusammensetzung ist erhältlich durch Hydrolyse und Polykondensation von einem oder mehreren Silanen in Anwesenheit nanoskaliger SiO₂-Teilchen und/oder mindestens einer Verbindung aus der Gruppe der Oxide und Hydroxide der Alkali- und Erdalkalimetalle. Die Beschichtungszusammerisetzung wird auf die metallische Oberfläche aufgebracht und der resultierende Überzug thermisch zu einer glasartigen Schicht verdichtet. Es wird angegeben, dass auf diese Schicht weitere glasartige Schichten aufgebracht werden können, wobei als Beispiele für solche Schichten auf WO 95/13249 verwiesen wird.

WO 95/13249 betrifft die Herstellung von funktionellen glasartigen, vorzugsweise farbigen oder kolloid gefärbten Schichten auf Substraten. Die Beschichtungszusammensetzung umfasst eine Zusammensetzung, die durch Hydrolyse und Polykondensation von einem oder mehreren hydrolysierbaren Silanen erhalten wird. Hierzu wird ein Funktionsträger zugemischt und die mit dem Funktionsträger vermischte Zusammensetzung wird auf ein Substrat aufgebracht und thermisch zu einer glasartigen Schicht verdichtet. Bei dem Funktionsträger kann es sich um nanoskalige Funktionsträger handeln. Als geeignete Substrate werden Metall, Glas, Keramik und Email aufgeführt.

Die erfindungsgemäße Aufgabe bestand darin, ein abriebfestes Diffusionssperrschichtsystem bereitzustellen, bei dem eine Beschichtung aus dünnen Schichten mit hoher mechanischer Festigkeit und erhöhter Diffusionssperrwirkung vorliegt. Insbesondere sollte dies erreicht werden, ohne daß eine Wärmebehandlung bei hohen Temperaturen (z.B. einer Verdichtung der Schichten bei 450°C bis 1000°C) erforderlich ist, so daß das Beschichtungssystem auch für Substrate geeignet ist, die solchen hohen Temperaturen nicht ausgesetzt werden können. Weiter sollten auch transparente Schichten möglich sein, so daß beschichtete Substrate mit den oben genannten Eigenschaften erhalten werden können, die für optische Anwendungen geeignet sind. Die beschichteten Substrate sollten weiter über ein naßchemisches Verfahren realisierbar sein.

Die erfindungsgemäße Aufgabe konnte überraschenderweise durch ein Kunststoffsubstrat mit einem abriebfesten Diffusionssperrschichtsystem gelöst werden, das umfaßt
eine harte Grundschicht, die eine Beschichtungszusammensetzung auf Basis von thermisch oder photochemisch zu einem Polymer härtbaren oder polymerisierbaren Verbindungen enthält, und
eine Deckschicht, die erhältlich ist durch Auftragen einer nanoskalige Sol- und/oder Feststoffteilchen enthaltenden Masse auf die noch reaktive Oberflächengruppen aufweisende Grundschicht und anschließende Wärmebehandlung oder Härtung.

Die harte Grundschicht enthält eine Beschichtungszusammensetzung auf Basis von thermisch oder photochemisch zu einem Polymer härtbaren oder polymerisierbaren Verbindungen. Bei den härtbaren oder polymerisierbaren Verbindungen handelt es sich um anorganische, organisch modifizierte anorganische oder rein organische Verbindungen oder Monomere, wobei natürlich auch Mischungen davon eingesetzt werden können. Bevorzugt werden organisch modifizierte anorganische Verbindungen oder Mischungen von organisch modifizierten anorganischen Verbindungen und anorganischen Verbindungen verwendet, wobei im letzteren Fall bevorzugt mindestens 40 Mol.-%, besonders bevorzugt mindestens 60 Mol.-% organisch modifizierter anorganischer Verbindungen enthalten sind. Insgesamt sind bevorzugt mindestens 20 Mol.-%, besonders bevorzugt mindestens 40 Mol.-%, aller eingesetzten polymerisierbaren oder härtbaren Verbindungen organische Verbindungen und/oder organisch modifizierte anorganische Verbindungen.

Unter Polymerisation werden hier alle üblichen Polymerisationsreaktionen, wie radikalische Polymerisation, Polykondensation oder Polyaddition, verstanden. Hierzu gehört insbesondere auch die beim später erläuterten Sol-Gel-Verfahren stattfindende (Poly)kondensation der hydrolysierbaren Verbindungen. Bei den dabei entstehenden Kondensaten handelt es sich dementsprechend ebenfalls um Polymere. Unter Härtung (Vernetzung) wird insbesondere die Verknüpfung zu einem dreidimensionalen Netzwerk verstanden. Hierzu gehört auch die Kondensation von hydrolysierbaren Verbindungen zu einem dreidimensionalen Netzwerk. Die Verbindungen können in der Beschichtungszusammensetzung als Monomere enthalten sein, es kann sich aber auch um bereits zumindest teilweise polymerisierte oder vernetzte Oligomere oder (Pre)polymere handeln. In den Beschichtungszusammensetzungen, die anorganische oder organisch modifizierte anorganische Verbindungen umfassen, können diese dann z.B. bereits teilweise hydrolysiert und/oder kondensiert vorliegen.

Bevorzugt handelt es sich bei der Beschichtungszusammensetzung auf Basis von thermisch oder photochemisch zu einem Polymer härtbaren oder polymerisierbaren Verbindungen um eine Beschichtungszusammensetzung auf Basis von Verbindungen von Glas- und/oder Keramik-bildenden Elementen. Bei diesen Verbindungen handelt es sich insbesondere um hydrolysierbare und kondensierbare Verbindungen. Die Beschichtungszusammensetzung wird aus diesen Verbindungen bevorzugt nach dem Sol-Gel-Verfahren erhalten. Beispiele für Glas- und/oder Keramik-bildende Elemente sind die Elemente der Gruppen 3 bis 6 und 12 bis 15 des Periodensystems oder die Lanthaniden-Elemente. Bei diesen Elementen handelt es sich vorzugsweise um solche von Si, Al, B, Pb, Sn, Ti, Zr, V und Zn, insbesondere solche von Si, Al, Ti und Zr, oder Mischungen davon. Es können aber auch Verbindungen anderer Elemente eingesetzt werden, insbesondere solche von Elementen der Gruppen 1 und 2 des Periodensystems (z.B. Na, K, Ca und Mg) oder der Gruppen 7 bis 10 des Periodensystems (z.B. Mn, Fe, Co und Ni). Vorzugsweise machen Verbindungen der soeben genannten Elemente aber nicht mehr als 20 und insbesondere nicht mehr als 10 Mol-% der insgesamt eingesetzten hydrolysierbaren monomeren Verbindungen aus.

Besonders bevorzugt handelt es sich bei der Beschichtungszusammensetzung um eine nach dem Sol-Gel-Verfahren erhaltene Beschichtungszusammensetzung auf Basis von organisch modifizierten anorganischen Verbindungen, insbesondere Silanverbindungen. Insbesondere werden hydrolysierbare Silanverbindungen eingesetzt, wobei bevorzugt zumindest ein Teil der hydrolysierbaren Silanverbindungen mindestens einen nicht hydrolysierbaren Substituenten aufweist. Beispielweise umfaßt eine bevorzugte Beschichtungszusammensetzung ein nach dem Sol-Gel-Verfahren erhältliches Polykondensat auf Basis von
(A) einem oder mehreren Silanen der allgemeinen Formel (I)

   RₐSiX₍₄₋ₐ₎ (I)

   worin die Reste R gleich oder verschieden sind und nicht hydrolysierbare Gruppen darstellen, die Reste X gleich oder verschieden sind und hydrolysierbare Gruppen oder Hydroxylgruppen bedeuten und a den Wert 0, 1, 2 oder 3 hat, wobei bei mindestens 40 Stoffmengen-% der Silane a größer 0 ist, oder einem davon abgeleiteten Oligomer, und
(B) gegebenenfalls einer oder mehreren Verbindungen von Glas- oder Keramik-bildenden Elementen.
In der allgemeinen Formel (I) sind die hydrolysierbaren Gruppen X, die gleich oder voneinander verschieden sein können, beispielsweise Wasserstoff oder Halogen (F, Cl, Br oder I), Alkoxy (vorzugsweise C₁₋₆-Alkoxy, wie z.B. Methoxy, Ethoxy, n-Propoxy, i-Propoxy und Butoxy), Aryloxy (vorzugsweise C₆₋₁₀-Aryloxy, wie z.B. Phenoxy), Acyloxy (vorzugsweise C₁₋₆-Acyloxy, wie z.B. Acetoxy oder Propionyloxy), Alkylcarbonyl (vorzugsweise C₂₋₇-Alkylcarbonyl, wie z.B. Acetyl), Amino, Monoalkylamino oder Dialkylamino mit vorzugsweise 1 bis 12, insbesondere 1 bis 6 Kohlenstoffatomen.

Bei den nicht hydrolysierbaren Resten R, die gleich oder voneinander verschieden sein können, kann es sich um nicht hydrolysierbare Reste R mit einer funktionellen Gruppe oder ohne eine funktionelle Gruppe handeln.

Der nicht hydrolysierbare Rest R ist beispielsweise Alkyl (vorzugsweise C₁₋₈-Alkyl, wie Methyl, Ethyl, n-Propyl, Isopropyl, n-Butyl, s-Butyl und t-Butyl, Pentyl, Hexyl, Octyl oder Cyclohexyl), Alkenyl (vorzugsweise C₂₋₆-Alkenyl, wie z.B. Vinyl, 1-Propenyl, 2-Propenyl und Butenyl), Alkinyl (vorzugsweise C₂₋₆-Alkinyl, wie z.B. Acetylenyl und Propargyl) und Aryl (vorzugsweise C₆₋₁₀-Aryl, wie z.B. Phenyl und Naphthyl). Die Reste R und X können gegebenenfalls einen oder mehrere übliche Substituenten, wie z.B. Halogen oder Alkoxy, aufweisen.

Spezielle Beispiele für die funktionellen Gruppen des Restes R sind die Epoxy-, Hydroxy-, Ether-, Amino-, Monoalkylamino-, Dialkylamino-, Amid-, Carboxy-, Vinyl-, Acryloxy-, Methacryloxy-, Cyano-, Halogen-, Aldehyd-, Alkylcarbonyl-, und Phosphorsäuregruppe. Diese funktionellen Gruppen sind über Alkylen-, Alkenylen- oder Arylen-Brückengruppen, die durch Sauerstoff- oder -NH-Gruppen unterbrochen sein können, an das Siliciumatom gebunden. Die genannten Brückengruppen leiten sich z.B. von den oben genannten Alkyl-, Alkenyl- oder Arylresten ab. Die Reste R mit einer funktionellen Gruppe enthalten vorzugsweise 1 bis 18, insbesondere 1 bis 8 Kohlenstoffatome. Natürlich kann der Rest R auch mehr als eine funktionelle Gruppe aufweisen.

In einer bevorzugten Ausführungsform werden hydrolysierbare Silane mit einer funktionellen Gruppe, insbesondere mit den obengenannten funktionellen Gruppen, bevorzugt Epoxygruppen, wie einer Glycidyl- oder Glycidyloxygruppe, oder (Meth)acryloxygruppen, eingesetzt. Es handelt sich insbesondere um Silane der allgemeinen Formel (I), wobei X vorzugsweise C₁₋₄-Alkoxy und besonders bevorzugt Methoxy und Ethoxy ist, und R ein Glycidyloxy-(C₁₋₆)-alkylen-Rest oder ein (Meth)acryloxy-(C₁₋₆)-alkylen-Rest ist, wobei (C₁₋₆)-Alkylen z.B. für Methylen, Ethylen, Propylen oder Butylen steht. Konkrete Beispiele für erfindungsgemäß einsetzbare hydrolysierbare Silane können z.B. der EP-A-195493 entnommen werden. Wegen der leichten Zugänglichkeit werden γ-Glycidyloxypropyltrimethoxysilan, γ-Glycidyloxypropyltriethoxysilan, 3-(Meth)acryloxypropyl-tri-(m)ethoxysilan und 3-(Meth)acryloxypropyltrimethoxysilan erfindungsgemäß besonders bevorzugt eingesetzt. (Meth)acryl steht für Methacryl oder Acryl.

Sofern oben genannte Silane mit einem nicht hydrolysierbaren Substituenten mit Epoxygruppe eingesetzt werden, wird bevorzugt ein Härtungskatalysator verwendet, der ausgewählt ist aus Lewis-Basen und Alkoholaten von Titan, Zirkonium oder Aluminium. Dieser Härtungskatalysator wirkt insbesondere als Katalysator für die Epoxid-Epoxid- bzw. Polyol-Epoxid-Vemetzung. Der Härtungskatalysator wird in den entsprechenden Zusammensetzungen im allgemeinen in einer Menge von 0,01 bis 0,6 Mol pro Mol Epoxidgruppe der hydrolysierbaren Silane zugegeben. Bevorzugt sind Mengen im Bereich von 0,02 bis 0,4 und insbesondere 0,05 bis 0,3 Mol Härtungskatalysator pro Mol Epoxidgruppe.

Bei der Lewis-Base handelt es sich vorzugsweise um eine Stickstoffverbindung. Derartige Stickstoffverbindungen können z.B. ausgewählt werden aus N-Heterocyclen, Aminogruppen-haltigen Phenolen, polycyclischen Aminen und Ammoniak (vorzugsweise als wäßrige Lösung). Konkrete Beispiele hierfür sind 1-Methylimidazol, 2-(N,N-Dimethylaminomethyl)phenol, 2,4,6-Tris(N,N-dimethylaminomethyl)phenol und 1,8-Diazabicyclo[5.4.0]-7-undecen. Besonders bevorzugt unter diesen Verbindungen ist 1-Methylimidazol. Eine weitere Klasse von stickstoffhaltigen Lewis-Basen, die erfindungsgemäß eingesetzt werden können, sind hydrolysierbare Silane, die über mindestens einen nicht hydrolysierbaren Rest verfügen, der mindestens eine primäre, sekundäre oder tertiäre Aminogruppe umfaßt.

Bei den Alkoholaten von Ti, Zr oder Al handelt es vorzugsweise sich um ein solche der allgemeinen Formel (II)

M(OR"')ₘ (II)

worin M für Ti, Zr oder Al steht, R''' eine Alkylgruppe mit vorzugsweise 1 bis 4 Kohlenstoffatomen (Methyl, Ethyl, n-Propyl, Isopropyl, n-Butyl, sek.-Butyl oder tert.-Butyl) oder eine Alkylenoxyalkylgruppe mit vorzugsweise 1 bis 4 Kohlenstoffatomen sowohl für die Alkylen- als auch die Alkyleinheit (z. B. Methylen, Ethylen, 1,2-Propylen, 1,3-Propylen und 1,4-Butylen für die Alkyleneinheit und die vorstehend für die Alkylgruppe genannten Beispiele für die Alkyleinheit) darstellt und m 4 (M = Ti, Zr) oder 3 (M = Al) ist. Bevorzugte Härtungskatalysatoren sind Al(OCH₂CH₂OC₄H₉)₃ (Aluminiumtributoxyethanolat), wobei die Butylgruppe vorzugsweise eine n-Butylgruppe ist, Aluminium-sek.-butylat und Mischungen von Aluminiumtributoxyethanolat und Aluminium-sek.-butylat. Für weitere Einzelheiten wird auf die DE-A-4338361 verwiesen.

Sofern oben genannte Silane mit einem nicht hydrolysierbaren Substituenten mit einer funktionellen Gruppe eingesetzt werden, können auch andere hydrolysierbare Verbindungen von Glas- oder Keramik-bildenden Elementen zusammen mit dem hydrolysierbaren Silan mit funktioneller Gruppe eingesetzt werden, wobei die Menge der anderen hydrolysierbaren Verbindungen 80 Mol-%, und insbesondere 60 Mol-%, bezogen auf die insgesamt eingesetzten hydrolysierbaren Verbindungen, bevorzugt nicht übersteigt. Bevorzugt sind mindestens 10 und besonders bevorzugt mindestens 20 Mol-% aller eingesetzten hydrolysierbaren Verbindungen die anderen hydrolysierbaren Verbindungen, die von dem bzw. den hydrolysierbaren Silanen mit mindestens einer funktionellen Gruppe an einem nicht hydrolysierbaren Substituenten verschieden sind.

Als weitere Komponente kann insbesondere bei Beschichtungszusammensetzungen auf Basis von hydrolysierbaren Silanverbindungen mit einer Epoxidgruppe ein organisches Monomer, Oligomer oder Polymer mit mindestens einer Epoxidgruppe oder Mischungen davon eingesetzt werden. Bei diesen organischen Monomeren, Oligomeren oder Polymeren mit Epoxidgruppen handelt es sich z. B. um an sich bekannte Verbindungen, die nach dem Stand der Technik als Epoxidharze, Gießharze und als Epoxyreaktiwerdünner eingesetzt werden.

Bei den weiteren hydrolysierbaren Verbindungen von Glas- oder Keramik-bildenden Elementen können Verbindungen aller oben erläuterten Glas- oder Keramik- bildenden Elemente verwendet werden. Als Beispiele für die hydrolysierbaren Gruppen dieser Verbindungen kann auf die in Formel (I) aufgeführten Beispiele für X verwiesen werden. Bevorzugte Beispiele sind die Verbindungen der Formel (II) und die in der DE-A-4338361 aufgeführten Verbindungen H. Die Verbindungen können auch neben den hydrolysierbaren Gruppen nicht hydrolysierbare Gruppen aufweisen. Dies ist aber außer für Si nicht bevorzugt. Als Beispiele kann ebenfalls auf die in Formel (I) aufgeführten Beispiele für R verwiesen werden. Bevorzugt sind nicht mehr als 70 Mol.-%, insbesondere nicht mehr als 50 Mol.-% aller hydrolysierbaren Verbindungen Verbindungen von Glas- oder Keramik-bildenden Elementen, die nicht Si sind.

Außerdem können als hydrolysierbare Verbindungen, zusätzlich oder allein, beispielsweise ein oder mehrere hydrolysierbare Siliciumverbindungen mit mindestens einem nicht hydrolysierbaren Rest eingesetzt werden, der 5 bis 30 Fluoratome an Kohlenstoffatome gebunden aufweist, die gegebenenfalls durch mindestens zwei Atome von Si getrennt sind. Als hydrolysierbare Gruppen können dabei z.B. solche eingesetzt werden, wie sie in Formel (I) für X angegeben sind. Derartige Silane werden in der DE 41 18 184 detailliert beschrieben. Diese fluorierten Silane werden, falls gewünscht, im allgemeinen in einer Menge von 0,1 bis 15, vorzugsweise 0,2 bis 10 und besonders bevorzugt 0,5 bis 5 Gew.-%, bezogen auf das Gewicht aller hydrolysierbaren Verbindungen, eingesetzt.

Neben den anorganischen oder organisch modifizierten anorganischen Verbindungen kann die Beschichtungszusammensetzung auch auf rein organischen Verbindungen (Monomeren) basieren. Gegebenenfalls kann die thermisch oder photochemisch zu einem Polymer härtbare oder polymerisierbare Verbindung teilweise oder vollständig durch ein entsprechendes Polymer ersetzt werden. Dieses Polymer auf Basis organischer Verbindungen weist bevorzugt noch reaktive Gruppen auf, über die eine weitere Polymerisation oder eine Härtung erfolgen kann. Sofern die Beschichtungszusammensetzung nur auf diesen Polymeren auf Basis organischer Verbindungen basiert, ist es notwendig, daß die reaktiven Gruppen vorliegen. Bei den einsetzbaren organischen Monomeren und Polymeren handelt es sich z.B. um die üblichen aus dem Stand der Technik bekannten Monomere und Lacksysteme, wie sie z.B. in Ullmanns, Encyklopädie der technischen Chemie, Bd. 15, 4. Aufl., 1978, S. 589 ff. beschrieben sind.

Spezielle Beispiele für polymerisierbare Monomere, die eine rein organische Polymermatrix ergeben, sind (Meth)acrylsäure, (Meth)acrylsäureester, (Meth)acrylnitril, Styrol und Styrolderivate, Alkene (z. B. Ethylen, Propylen, Buten, Isobuten), halogenierte Alkene (z. B. Tetrafluorethylen, Chlortrifluorethylen, Vinylchlorid, Vinylfluorid, Vinylidenfluorid, Vinylidenchlorid), Vinylacetat, Vinylpyrrolidon, Vinylcarbazol und Gemische derartiger Monomere. Auch mehrfach ungesättigte Monomere können angewandt werden, z. B. Butadien und Ethylendimethacrylat.

Als entsprechende Polymere eignen sich beliebige bekannte Kunststoffe, z. B. Polyacrylsäure, Polymethacrylsäure, Polyacrylate, Polymethacrylate, Polyolefine, Polystyrol, Polyamide, Polyimide, Polyvinylverbindungen, wie Polyvinylchlorid, Polyvinylalkohol, Polyvinylbutyral, Polyvinylacetat und entsprechende Copolymere, z. B. Poly(ethylen-vinylacetat), Polyester, z. B. Polyethylenterephthalat oder Polydiallylphthalat, Polyarylate, Polycarbonate, Polyether, z. B. Polyoxymethylen, Polyethylenoxid oder Polyphenylenoxid, Polyetherketone, Polysulfone, Polyepoxide und Fluorpolymere, z. B. Polytetrafluorethylen. Vorzugsweise werden transparente Polymere oder entsprechende Monomere angewandt.

In einer bevorzugten Ausführungsform werden vemetzbare Beschichtungssysteme auf Basis von organischen Monomeren oder entsprechenden Polymeren eingesetzt. Diese können auf den oben genannten Polymeren basieren. Auch hierbei handelt es sich um die üblichen aus dem Stand der Technik bekannten Systeme, die z.B. in der oben genannten Literaturstelle von Ullmann aufgeführt werden. Konkrete Beispiele sind Acrylharze, Alkydharze, Polyesterharze (z. B. Vernetzung über Aminoplaste), Polyurethanharze und Epoxidharze und die entsprechenden Monomer-Systeme.

Der Beschichtungszusammensetzung auf Basis der thermisch oder photochemisch zu einem Polymer härtbaren oder polymerisierbaren Verbindungen können daneben weitere auf dem Gebiet der Beschichtungstechnik bekannte Additive zugegeben werden. Beispiele sind Lösungsmittel, Vernetzungsmittel, Gleitmittel, nanoskalige Feststoffteilchen, Polymerisationsinitiatoren, Photosensibilisatoren oder Verlaufsmittel. Beispiele für Gleitmittel sind Tenside, Fluorsilane oder Graphit. Bezüglich der einsetzbaren nanoskaligen Feststoffteilchen kann auf die nachstehende Erläuterung verwiesen werden.

Da der Auftrag der Beschichtungszusammensetzung auf das Substrat üblicherweise naßchemisch erfolgt, enthält die Beschichtungszusammensetzung bevorzugt ein Lösungsmittel. Dabei handelt es sich um die üblichen auf dem Gebiet der Beschichtung eingesetzten Lösungsmittel. Beispiele für geeignete Lösemittel, insbesondere hinsichtlich der eine organisch modifizierte anorganische Matrix bildenden Verbindungen, sind Alkohole, vorzugsweise niedere aliphatische Alkohole (C₁-C₈-Alkohole), wie Methanol, Ethanol, 1-Propanol, i-Propanol und 1-Butanol, Ketone, vorzugsweise niedere Dialkylketone, wie Aceton und Methylisobutylketon, Ether, vorzugsweise niedere Dialkylether, wie Diethylether, oder Monoether von Diolen, wie Ethylenglycol oder Propylenglycol, mit C₁-C₈-Alkoholen, Amide, wie Dimethylformamid, und deren Gemische. Beispiele für hochsiedende Lösemittel sind Triethylenglycol, Diethylenglycoldiethylether und Tetraethylenglycoldimethylether. Bezüglich weiterer Lösungsmittel, insbesondere hinsichtlich für eine organische Matrix bildende Verbindungen, sei wiederum auf oben genannte Literaturstelle von Ullmann verwiesen.

Die Beschichtungszusammensetzung kann Vernetzungsmittel enthalten. Die Vernetzungsmittel enthalten mindestens zwei reaktive Gruppen, die mit den in der Beschichtungszusammensetzung enthaltenen funktionellen Gruppen reagieren können. Die Art der Vernetzungsmittel richtet sich natürlich nach den in der Beschichtungszusammensetzung vorhandenen funktionellen Gruppen. Die Auswahl der geeigneten Vernetzungsmittel ist dem Fachmann geläufig. Beispielsweise können bei Epoxid-haltigen Beschichtungszusammensetzungen Vernetzungsmittel mit anorganischen oder organischen Gruppen mit reaktionsfähigem Wasserstoff, z.B. Amin-, Isocyanat- oder Hydroxylgruppen, verwendet werden.

Einsetzbare Polymerisationsinitiatoren sind Photoinitiatoren und thermische Polymerisationskatalysatoren, die in Abhängigkeit von der eingesetzten Zusammensetzung ausgewählt werden und dem Fachmann bekannt sind. Beispiele sind radikalische Photostarter, radikalische Thermostarter, kationische Photostarter, kationische Thermostarter und beliebige Kombinationen derselben.

Konkrete Beispiele für einsetzbare radikalische Photostarter sind Irgacure^{®} 184 (1-Hydroxycyclohexylphenylketon), Irgacure^{®} 500 (1-Hydroxycyclohexylphenylketon, Benzophenon) und andere von der Firma Ciba-Geigy erhältliche Photoinitiatoren vom Irgacure^{®}-Typ; Darocur^{®} 1173, 1116, 1398, 1174 und 1020 (erhältlich von der Firma Merck); Benzophenon, 2-Chlorthioxanthon, 2-Methylthioxanthon, 2-Isopropylthioxanthon, Benzoin, 4,4'-Dimethoxybenzoin, Benzoinethylether, Benzoinisopropylether, Benzildimethylketal, 1,1,1-Trichloracetophenon, Diethoxyacetophenon und Dibenzosuberon. Beispiele für radikalische Thermostarter sind u.a. organische Peroxide in Form von Diacylperoxiden, Peroxydicarbonaten, Alkylperestern, Alkylperoxiden, Perketalen, Ketonperoxiden und Alkylhydroperoxiden sowie Azo-Verbindungen. Als konkrete Beispiele wären hier insbesondere Dibenzoylperoxid, tert-Butylperbenzoat und Azobisisobutyronitril zu nennen. Ein Beispiel für einen kationischen Photostarter ist Cyracure^{®} UVI-6974, während ein bevorzugter kationischer Thermostarter 1-Methylimidazol ist.

Eine photochemische Härtung kann nach üblichen Verfahren, z.B. mittels UV-Strahlung, erfolgen. Des weiteren können auch weitere übliche Härtungsverfahren, wie Elektronenstrahl-Härtung und Laserhärtung durchgeführt werden.

Diese Polymerisationsinitiatoren werden in den üblichen, dem Fachmann bekannten Mengen (z.B. 0,01 - 5 Gew.-%, insbesondere 0,1 - 2 Gew.-%, bezogen auf den GesamtFeststoffgehalt an Beschichtungszusammensetzung), eingesetzt. Selbstverständlich kann auch ohne Polymerisationsinitiator gearbeitet werden, wenn dieser nicht erforderlich ist.

In einer bevorzugten Ausführungsform wird die Beschichtungszusammensetzung nach dem Sol-Gel-Verfahren aus hydrolysierbaren Verbindungen erhalten. Dabei werden die hydrolysierbaren Verbindungen mit Wasser, gegebenenfalls durch Erwärmung oder saure oder basische Katalyse, hydrolysiert und teilweise kondensiert. Es können stöchiometrische Mengen Wasser, aber auch geringere oder größere Mengen verwendet werden. Das sich bildende Sol kann vom Fachmann durch geeignete Parameter, z.B. Kondensationsgrad, Lösungsmittel oder pH-Wert, ohne weiteres auf die für die Beschichtungszusammensetzung gewünschte Viskosität eingestellt werden. Die Beschichtungszusammensetzung wird bevorzugt in Form eines Sols für die Beschichtung verwendet. Weitere Einzelheiten zum Sol-Gel-Verfahren können z.B. W. Noll, Chemie und Technologie der Silicone, 2. Aufl., Verlag Chemie, 1968, entnommen werden.

Bevorzugt einsetzbare Beschichtungszusammensetzungen finden sich z.B. in der EP-A-0 607 213 oder in der DE-A-4338361 auf die vollinhaltlich Bezug genommen wird.

Die nanostrukturierte Deckschicht enthält Nanophasen, z.B. in Form von nanoskaligen Sol- und/oder Feststoffteilchen. Dabei handelt es sich insbesondere um nanoskalige anorganische Sol- und/oder Feststoffteilchen, die gegebenenfalls oberflächenmodifiziert sind.

Bei den nanoskaligen Sol- und/oder Feststoffteilchen handelt es sich um Teilchen mit einer mittleren Teilchengröße (einem mittleren Teilchendurchmesser) von nicht mehr als 1000 nm, bevorzugt nicht mehr als 200 nm, bevorzugter nicht mehr als 100 nm, und insbesondere nicht mehr als 70 nm. Ein besonders bevorzugter Teilchengrößenbereich liegt bei 1 bis 100 nm, insbesondere 5 bis 50 nm.

Die nanoskaligen (anorganischen) Sol- und/oder Feststoffteilchen können aus beliebigen Materialien bestehen, vorzugsweise bestehen sie jedoch aus Metallen und insbesondere aus Metallverbindungen wie beispielsweise (gegebenenfalls hydratisierten) Oxiden wie ZnO, CdO, SiO₂, TiO₂, ZrO₂, CeO₂, SnO₂, Al₂O₃, In₂O₃, La₂O₃, Fe₂O₃, Cu₂O, Ta₂O₅, Nb₂O₅, V₂O₅, MoO₃ oder WO₃; Chalkogeniden wie beispielsweise Sulfiden (z.B. CdS, ZnS, PbS und Ag₂S), Seleniden (z.B. GaSe, CdSe und ZnSe) und Telluriden (z.B. ZnTe oder CdTe), Halogeniden wie AgCl, AgBr, Agl, CuCl, CuBr, Cdl₂ und Pbl₂; Carbiden wie CdC₂ oder SiC; Arseniden wie AlAs, GaAs und GeAs; Antimoniden wie InSb; Nitriden wie BN, AlN, Si₃N₄ und Ti₃N₄; Phosphiden wie GaP, InP, Zn₃P₂ und Cd₃P₂; Phosphaten, Silikaten, Zirkonaten, Aluminaten, Stannaten und den entsprechenden Mischoxiden (z.B. Indium-Zinn-Oxiden (ITO) und solchen mit Perowskitstruktur wie BaTiO₃ und PbTiO₃).

Bevorzugt handelt es sich bei den eingesetzten nanoskaligen anorganischen Sol- und/oder Feststoffteilchen um solche von Oxiden, Sulfiden, Seleniden und Telluriden von Metallen und Mischungen derselben. Erfindungsgemäß besonders bevorzugt werden nanoskalige Teilchen von SiO₂, TiO₂, ZrO₂, ZnO, Ta₂O₅, SnO₂ und Al₂O₃ (in allen Modifikationen, insbesondere als Böhmit, AIO(OH)) sowie Mischungen derselben.

Die Herstellung der erfindungsgemäß eingesetzten nanoskaligen Feststoffteilchen kann auf übliche Weise erfolgen, z.B. durch Flammpyrolyse, Plasmaverfahren, Gasphasenkondensationsverfahren, Kolloidtechniken, Präzipitationsverfahren, Sol-Gel-Prozesse, kontrollierte Nucleations- und Wachstumsprozesse, MOCVD-Verfahren und (Mikro)emulsionsverfahren. Diese Verfahren sind in der Literatur ausführlich beschrieben. Insbesondere können z.B. Metalle (beispielsweise nach der Reduktion auch Fällungsverfahren), keramische oxidische Systeme (durch Präzipitation aus Lösung), aber auch salzartige oder Mehrkomponentensysteme herangezogen werden. Zu den salzartigen oder Mehricomponentensystemen zählen auch Halbleitersysteme.

Die nanoskaligen Sol- und/oder Feststoffteilchen können als solche oder in oberflächenmodifizierter Form eingesetzt werden. Im allgemeinen ist der Einsatz von mit polymerisierbaren/polykondensierbaren Gruppen versehenen nanoskaligen Sol- und/oder Feststoffteilchen bevorzugt, insbesondere bei nanoskaligen Sol- und/oder Feststoffteilchen aus SiO₂ können aber auch ohne Oberflächenmodifizierung sehr gute Resultate erzielt werden. Hierfür können z.B. handelsübliche Kieselsäureprodukte, z.B. Kieselsole, wie die Levasile® der Bayer AG, oder pyrogene Kieselsäuren, z.B. die Aerosil-Produkte von Degussa, verwendet werden. Die nicht-oberflächenmodifizierten Teilchen können aber auch in situ hergestellt werden.

Die Herstellung der mit polymerisierbaren und/oder polykondensierbaren organischen Oberflächengruppen versehenen nanoskaligen anorganischen Teilchen, die erfindungsgemäß eingesetzt werden können, kann prinzipiell auf zwei verschiedenen Wegen durchgeführt werden, nämlich zum einen durch Oberflächenmodifizierung von bereits hergestellten nanoskaligen anorganischen Teilchen und zum anderen durch Herstellung dieser anorganischen nanoskaligen Teilchen unter Verwendung von einer oder mehreren Verbindungen, die über derartige polymerisierbare und/oder polykondensierbare Gruppierungen verfügen. Diese beiden Wege werden weiter unten näher erläutert.

Bei den organischen polymerisierbaren und/oder polykondensierbaren Oberflächengruppen kann es sich um beliebige, dem Fachmann bekannte Gruppen handeln, die einer radikalischen, kationischen oder anionischen, thermischen oder photochemischen Polymerisation oder einer thermischen oder photochemischen Polykondensation (gegebenenfalls in Anwesenheit eines geeigneten Initiators bzw. Katalysators) zugänglich sind. Erfindungsgemäß bevorzugt werden Oberflächen gruppen, die über eine (Meth)acryl-, Allyl-, Vinyl- oder Epoxygruppe verfügen, wobei (Meth)acryl- und Epoxygruppen besonders bevorzugt werden. Bei den polykondensationsfähigen Gruppen wären vor allem Hydroxy-, Carboxy- und Aminogruppen zu nennen, mit deren Hilfe Ether-, Ester- und Amidbindungen erhalten werden können.

Erfindungsgemäß bevorzugt ist es auch, daß die an den Oberflächen der nanoskaligen Teilchen vorhandenen organischen Gruppierungen, die die polymerisierbaren und/oder polykondensierbaren Gruppen umfassen, ein relativ niedriges Molekulargewicht aufweisen. Insbesondere sollte das Molekulargewicht der (rein organischen) Gruppierungen 500 und vorzugsweise 300, besonders bevorzugt 200, nicht übersteigen. Dies schließt selbstverständlich ein deutlich höheres Molekulargewicht der diese Gruppierungen umfassenden Verbindungen (Moleküle) nicht aus (z.B. 1000 und mehr).

Wie bereits oben erwähnt, können die polymerisierbaren/polykondensierbaren Oberflächengruppen prinzipiell auf zwei Wegen bereitgestellt werden. Wird eine Oberflächenmodifizierung bereits hergestellter nanoskaliger Teilchen durchgeführt, eignen sich zu diesem Zweck alle (vorzugsweise niedermolekularen) Verbindungen, die zum einen über eine oder mehrere Gruppen verfügen, die mit auf der Oberfläche der nanoskaligen Feststoffteilchen vorhandenen (funktionellen) Gruppen (wie beispielsweise OH-Gruppen im Falle von Oxiden) reagieren oder zumindest wechselwirken können, und zum anderen mindestens eine polymerisierbare/polykondensierbare Gruppe aufweisen. Somit können die entsprechenden Verbindungen z.B. sowohl kovalente als auch ionische (salzartige) oder koordinative (Komplex)-Bindungen zur Oberfläche der nanoskaligen Feststoffteilchen ausbilden, während unter den reinen Wechselwirkungen beispielhaft Dipol-Dipol-Wechselwirkungen, Wasserstoffbrückenbindungen und van der Waals-Wechselwirkungen zu nennen wären. Bevorzugt wird die Ausbildung von kovalenten und/oder koordinativen Bindungen. Konkrete Beispiele für zur Oberflächenmodifizierung der nanoskaligen anorganischen Feststoffteilchen heranziehbare organische Verbindungen sind beispielsweise ungesättigte Carbonsäuren wie Acrylsäure und Methacrylsäure, β-Dicarbonyl-Verbindungen (z.B. β-Diketone oder β-Carbonylcarbonsäuren) mit polymerisierbaren Doppelbindungen, ethylenisch ungesättigte Alkohole und Amine, Epoxide und dergleichen. Erfindungsgemäß besonders bevorzugt als derartige Verbindungen werden - insbesondere im Fall von oxidischen Teilchen - hydrolytisch kondensierbare Silane mit mindestens (und vorzugsweise) einem nicht hydrolysierbaren Rest, der über eine polymerisierbare Kohlenstoff-Kohlenstoff-Doppelbindung oder einen Epoxidring verfügt. Vorzugsweise weisen derartige Silane die allgemeine Formel (III) auf:

Y-R¹-SiR²₃ (III)

worin Y für CH₂=CR³-COO, CH₂=CH oder Glycidyloxy steht, R³ Wasserstoff oder Methyl darstellt, R¹ ein zweiwertiger Kohlenwasserstoffrest mit 1 bis 10, vorzugsweise 1 bis 6 Kohlenstoffatomen, ist, der gegebenenfalls eine oder mehrere Heteroatomgruppierungen (z.B. O, S, NH) enthält, die benachbarte Kohlenstoffatome voneinander trennen, und die Reste R², gleich oder verschieden voneinander, die in der allgemeinen Formel (I) für X genannten Gruppen sind und insbesondere aus Alkoxy-, Aryloxy-, Acyloxy- und Alkylcarbonylgruppen sowie Halogenatomen (insbesondere F, Cl und/oder Br) ausgewählt sind.

Vorzugsweise sind die Gruppen R² identisch und ausgewählt aus Halogenatomen, C₁₋₄-Alkoxygruppen (z.B. Methoxy, Ethoxy, n-Propoxy, i-Propoxy und Butoxy), C₆₋₁₀-Aryloxy-gruppen (z.B. Phenoxy), C₁₋₄-Acyloxygruppen (z.B. Acetoxy und Propionyloxy) und C₂₋₁₀-Alkylcarbonylgruppen (z.B. Acetyl). Besonders bevorzugte Reste R² sind C₁₋₄-Alkoxygruppen und insbesondere Methoxy und Ethoxy.

Beim Rest R¹ handelt es sich vorzugsweise um eine Alkylengruppe, insbesondere um eine solche mit 1 bis 6 Kohlenstoffatomen, wie z.B. Ethylen, Propylen, Butylen und Hexylen. Wenn Y für CH₂=CH steht, bedeutet R¹ vorzugsweise Methylen und kann in diesem Fall auch eine bloße Bindung bedeuten.

Vorzugsweise stellt Y CH₂=CR³-COO (wobei R³ vorzugsweise CH₃ ist) oder Glycidyloxy dar. Dementsprechend sind besonders bevorzugte Silane der allgemeinen Formel (I) (Meth)acryloyloxyalkyltrialkoxysilane wie z.B. 3-Methacryloyloxypropyltri(m)ethoxysilan und Glycidyloxyalkyltrialkoxysilane wie beispielsweise 3-Glycidyloxypropyltri(m)ethoxysilan.

Erfolgt bereits die Herstellung der nanoskaligen anorganischen Teilchen unter Verwendung einer oder mehrerer Verbindungen, die über polymerisierbare/polykondensierbare Gruppen verfügen, kann von einer nachträglichen Oberflächenmodifizierung abgesehen werden (obwohl diese selbstverständlich als zusätzliche Maßnahme möglich ist).

Die in situ-Herstellung von nanoskaligen anorganischen Sol- und/oder Feststoffteilchen mit polymerisierbaren/polykondensierbaren Oberflächengruppen sei im folgenden am Beispiel von SiO₂-Teilchen erläutert. Zu diesem Zweck können die SiO₂-Teilchen z.B. nach dem Sol-Gel-Prozeß unter Verwendung mindestens eines hydrolytisch polykondensierbaren Silans mit mindestens einer polymerisierbaren/polykondensierbaren Gruppe hergestellt werden. Als derartige Silane eignen sich beispielsweise die oben bereits beschriebenen Silane der allgemeinen Formel (I) ohne nicht-hydrolysierbare Substituenten. Hierbei können auch Silane eingesetzt werden, die über eine (nicht-hydrolysierbare) Kohlenwasserstoffgruppe ohne jegliche funktionelle Gruppe verfügen, wie beispielsweise Methyl- oder Phenyltrialkoxysilane. Insbesondere dann, wenn eine leicht zu reinigende (easy to clean) Oberfläche der Schicht gewünscht wird, kann es empfehlenswert sein, eine gewisse Menge (z.B. bis zu 60 und insbesondere bis zu 50 Molprozent auf der Basis aller eingesetzten Silane) von obengenannten Silanen mit fluorhaltigen (nicht-hydrolysierbaren) Resten einzusetzen.

Ein (zusätzlicher) Bestandteil der nanoskalige Sol- und/oder Feststoffteilchen enthaltenden Masse kann beispielsweise auch mindestens eine monomere oder oligomere Spezies sein, die über mindestens eine Gruppe verfügt, die mit den an der Oberfläche der nanoskaligen Teilchen vorhandenen polymerisierbaren/polykondensierbaren Gruppen reagieren (polymerisieren bzw. polykondensieren) kann. Als derartige Spezies seien z.B. Monomere mit einer polymerisierbaren Doppelbindung wie beispielsweise Acrylsäureester, Methacrylsäureester, Styrol, Vinylacetat und Vinylchlorid genannt. Bezüglich weiterer Einzelheiten zu den nanoskaligen Feststoffteilchen, den monomeren oder oligomeren Spezies und zusätzlich einsetzbarer Additive wird auf die DE-A-19746885 verwiesen, auf die vollinhaltlich Bezug genommen wird. Des weiteren können insbesondere die vorstehend für die Beschichtungszusammensetzung aufgeführten Additive auch bei der nanoskalige Feststoffteilchen enthaltenden Masse eingesetzt werden. Auch die dort für die Additive aufgeführten konkreten Beispiele können für die Deckschicht verwendet werden.

Die nanoskalige Teilchen enthaltende Masse wird bevorzugt naßchemisch auf die Grundschicht aufgebracht. Die Masse liegt daher bevorzugt in Form eines Sols beziehungsweise in Form einer noch fließfähigen Masse (Suspension) vor. Der flüssige Bestandteil dieser Masse setzt sich zum Beispiel aus Wasser und/oder (vorzugsweise mit Wasser mischbarem) organischen Lösungsmittel und/oder Verbindungen, die im Zuge der Herstellung der nanoskaligen Teilchen oder deren Oberflächenrüodifizierung eingesetzt oder erzeugt wurden (z.B. Alkoholen im Falle von Alkoxysilanen), zusammen. Gegebenenfalls zusätzlich eingesetzte geeignete organische Lösungsmittel sind zum Beispiel Alkohole, Ether, Ketone, Ester, Amide und dergleichen. Hierfür sei auf die oben genannten Lösungsmittel verwiesen. Neben dem Lösungsmittel enthält die nanoskalige Teilchen enthaltende Masse in einer bevorzugten Ausführungsform außer gegebenenfalls einzusetzenden, ebenfalls bereits vorstehend aufgeführten Polymerisationsinitiatoren keine weiteren Additive.

Bei dem zu beschichteten Substrat handelt es sich um ein Substrat aus Kunststoff. Das Substrat kann jede beliebige Form, z.B. als Platte, Folie, Scheibe oder eine unregelmäßige Form, aufweisen. Da ein besonderer Vorteil der vorliegenden Erfindung darin besteht, daß abriebfeste Diffusionssperrschichten erhalten werden können, ohne daß hohe Temperaturen eingesetzt werden müssen, ist die Erfindung naturgemäß für thermisch empfindliche Substrate besonders geeignet, wie die Substrate aus Kunststoff. Beispiele für Kunststoff-Substrate sind Polyethylen, Polypropylen, Polyacrylat, wie Polymethylmethacrylat und Polymethylacrylat, Polyvinylbutyral, Polycarbonat, Polyurethane, ABS-Copolymere oder Polyvinylchlorid. Da die erfindungsgemäßen Beschichtungssysteme auch ohne weiteres transparent hergestellt werden können, sind transparente Substrate aus Kunststoffe bevorzugt.

Das Substrat kann auf die übliche Weise vorbehandelt werden, z. B. um eine Reinigung, eine Entfettung, einen Korrosionsschutz, eine Glättung oder eine bessere Haftung mit der Beschichtung zu erreichen. Das Substrat kann z.B. mit einer Unterschicht versehen oder mit einem üblichen Primer, wie Silane oder Aminosilane, mittels Ar/O₂-Plasma oder Corona-Entladung oder geeigneter Bestrahlungsverfahren vorbehandelt werden.

Sowohl die Beschichtungszusammensetzung für die Grundschicht als auch die Masse für die Deckschicht(en) werden bevorzugt naßchemisch, insbesondere in Form eines Sols, auf das Substrat aufgetragen. Sie können auf jede übliche Weise aufgetragen werden, z.B durch Spritzen, Sprühen, Gießen, Streichen, Elektrotauchen, Tauchen oder durch Schleuder- oder Flutbeschichtung. Die Grundschicht weist bevorzugt eine Trockenschichtdicke im Bereich von 1 - 50 µm, bevorzugt 3 - 30 µm, und insbesondere 5 - 10 µm auf. Die oder jede Deckschicht weist bevorzugt eine Trockenschichtdicke im Bereich von 100 - 1000 nm, bevorzugt 150 - 500 nm, und insbesondere 200 - 300 nm auf.

Die Beschichtungszusammensetzung für die Grundschicht wird so ausgewählt, daß eine harte Grundschicht gebildet wird. Die Härte von Beschichtungen kann auf verschiedene Weise bestimmt werden, z. B. durch Ritzprüfung. Standardisierte Methoden sind z.B. in oben genannter Literaturstelle von Ullmann angegeben. Unter einer harten Grundschicht wird hierbei vorzugsweise eine Grundschicht verstanden, die zumindest die gleiche Härte, bevorzugt eine höhere Härte, aufweist als das zu beschichtende Substrat.

Die Beschichtungszusammensetzung für die Grundschicht wird nach dem Auftragen solchen Bedingungen ausgesetzt werden, daß zwar eine Trocknung und/oder eine vollständige oder partielle Polymerisation oder Härtung stattfinden kann, es wird aber so gearbeitet, daß die Grundschicht noch reaktive Oberflächengruppen enthält.

Im Falle einer partiellen Polymerisation und/oder Härtung der Grundschicht kann die Beschichtungszusammensetzung, etwa nach einem Ablüften, z. B. thermisch oder photolytisch behandelt werden, um ein Antrocknen und/oder Anhärten zu erreichen. Die Randbedingungen, z.B. Temperatur, Strahlungsmenge oder Dauer der Behandlung, sind aber so zu wählen, daß die Grundschicht noch reaktive Gruppen enthält. Dies kann z. B. dadurch erreicht werden, die aufgetragene Grundschicht bei einer Temperatur in einem Bereich von Raumtemperatur bis nicht über 100°C, bevorzugt nicht über 85°C, insbesondere nicht über 70 °C getrocknet wird.

Im Falle einer vollständigen Polymerisation und/oder Härtung der Grundschicht wird diese zur Erzeugung reaktiver Oberflächengruppen nachbehandelt, z.B. durch Flamm-, Plasma-, Corona-, Oxidations- oder Reduktionsbehandlung oder Primer-Beschichtung.

Bei den reaktiven Gruppen handelt es sich um Gruppen, über die eine weitere Polymerisation oder Härtung möglich ist. Bezüglich dieser reaktiven Gruppen wird auf die bezüglich der Materialien für die Beschichtungen genannten funktionellen Gruppen verwiesen. Zu diesen reaktiven Gruppen gehören insbesondere auch die in den Beschichtungszusammensetzungen auf Basis der anorganischen oder organisch modifizierten Verbindungen noch enthaltenen hydrolysierbaren Gruppen (z.B. M-OAlkyl, M Glas- oder Keramik-bildendes Element wie Si) und die nach Hydrolyse sich ergebenden Hydroxylgruppen (z.B. M-OH, M Glas- oder Keramik-bildendes Element wie Si), die noch nicht, z.B. zu Siloxangruppen, kondensiert wurden. Über diese Gruppen kann dann eine weitere Kondensation erfolgen. Beispiele bevorzugt vorhandener reaktiver Gruppen sind Hydroxylgruppen, hydrolysierbare Gruppen an Glas- oder Keramik-bildenden Elementen (z.B. M-OAlkyl, M-OH), Epoxidgruppen und (Meth)acryloxygruppen. Durch die reaktiven Gruppen liegt auch eine ausreichende Reaktivität zur Erreichung einer ausreichenden Haftung der Deckschicht vor.

Auf die noch reaktive Oberflächengruppen aufweisende Grundschicht wird dann die nanostrukturierte Deckschicht aufgebracht und anschließend gehärtet oder wärmebehandelt. Die Härtung kann z.B. thermisch oder photochemisch erfolgen. Zu den möglichen Härtungsverfahren wird auf die bei der Grundschicht beschriebenen Verfahren verwiesen. Dabei wird angenommen, daß es auch zu Vernetzungsreaktionen zwischen den nanoskaligen Teilchen über gegebenenfalls vorhandene polymerisierbare polykondensierbare Oberflächengruppen kommt. Insbesondere bei Einsatz von nanoskaligen Teilchen ohne polymerisierbare/polykondensierbare Oberflächengruppen wird eine Wärmebehandlung durchgeführt. Ohne an eine Theorie gebunden zu sein, wird davon ausgegangen, daß es dabei zu Verknüpfungsreaktionen (z.B. über noch vorhandene Silanolgruppen) oder Verdichtungsreaktionen kommt. Natürlich kann es bei der Wärmebehandlung auch zu Härtungsreaktionen kommen.

Die thermische Härtung oder die Wärmebehandlung erfolgt z.B. bei Temperaturen von nicht mehr als 200°C, bevorzugt 60 bis 160°C, besonders bevorzugt 120 bis 130°C. Es sind also Temperaturbereiche möglich, die weit unterhalb der Temperaturen liegen, die gewöhnlich zur Verdichtung oder Sinterung für notwendig erachtet werden (üblicherweise mindestens 450°C). Trotzdem werden außergewöhnlich abriebfeste Diffusionssperrschichten erhalten. Dies ist umso erstaunlicher, da durch direktes Auftragen von nanoskalige Teilchen enthaltenden Massen auf ein Substrat keine geeigneten Beschichtungen erhalten werden können. Es wird vermutet, daß auch Wechselwirkungen zwischen den noch vorhandenen reaktiven Gruppen der Beschichtungsmasse und den reaktiven Gruppen in der für die Deckschicht eingesetzte Masse eine Rolle spielen, z.B. indem sie zu die Haftung verbessernden Bindungen zwischen den Schichten führen.

Es wurde festgestellt, daß die Permeationsrate von Gasen deutlich erniedrigt wird. Die mit einem Taber Abraser nach 1000 Zyklen festgestellten Abriebwerte, gemessen als Streulichtverlust in %, betragen teilweise nicht mehr als 1%. Demgegenüber ergeben sich bei Glas Streulichtverluste von 1,5%, bei transparenten Kunststoffen von 30 - 60% und bei üblichen Hartschichten von 3 - 20%.

Das erfindungsgemäße abriebfeste Diffusionssperrschichtsystem auf dem Substrat eignet sich als Schutzschicht. Anwendungsgebiete sind Beschichtungen für Maschinen, Fußböden, Bauteile, Instrumente, Rotoren, Gebrauchsgegenstände, Bedienungselemente, Materialien aus transparentem Kunststoff, Verscheibungen, Displays, Trinkgefäße, Möbel, Schmuck, sowie beim Fahrzeugbau und beim Innenausbau.

### Beispiele

### Beispiel 1: Herstellung eines SiO₂-Sols für die Deckschicht

98,87 g Tetraethoxysilan (TEOS) werden mit 63,83 g Ethanol zu einer Lösung A gemischt. Daneben werden 63,83 g Ethanol, 72,50 g deionisiertes Wasser und 1,38 g HCl (37%ig) zu einer Lösung B gemischt. Beim Mischen der Lösungen A und B entsteht unter Erwärmung auf 30 - 40°C ein Sol, das 1,5 h bei Raumtemperatur gerührt und dann bei -20°C gelagert wird.

Unmittelbar vor der Applikation wird das Sol mit Ethanol auf einen Feststoffgehalt von 3 Gew.-% verdünnt.

### Beispiel 2: Herstellung eines oberflächenmodifizierten SiO₂-Sols für die Deckschicht

Zur Herstellung eines alkoholischen 5,1 gew.-%igen SiO₂-Sols wurden 247 g Tetraethoxysilan (TEOS) mit 76 g Ethanol in HCl-saurer Lösung (76 g Ethanol + 76 g bidestilliertes H₂O + 5,8 g HCl, 37%ig in Wasser) hydrolysiert und kondensiert. Glycidyloxypropyltrimethoysilan (GPTS) wurde in einem Gewichtsverhältnis von SiO₂:GPTS von 4:1 dazugegeben und das Sol wurde 5 h bei 50°C gerührt. Alternativ kann anstelle von Glycidyloxypropyltrimethoysilan Methacryloxypropyltrimethoxysilan (MPTS) in einem entsprechenden Gewichtsverhältnis eingesetzt werden.

### Beispiel 3: Herstellung eines SiO₂-Sols für die Deckschicht

Zur Herstellung eines 3 gew.-%igen SiO₂-Sols werden 1,95 g Kieselsol ("Levasil 200S/30" von Bayer), 43,35 g Ethanol und 3,00 g Tetraethoxysilan (TEOS) gemischt und 18 h bei Raumtemperatur gerührt.

### Beispiel 4: Herstellung eines CeO₂ / SiO₂-Sols für die Deckschicht

Zur Herstellung eines 10 gew.-%igen CeO₂ / SiO₂-Sols werden 25 g Ethanol, 10,0 g einer 20 gew.-%igen Ceroxid-Suspension und 5,0 g Tetraethoxysilan (TEOS) gemischt und 24 h bei Raumtemperatur gerührt.

### Beispiel 5: Herstellung eines TiO₂-Sols für die Deckschicht

Zur Herstellung eines nanopartikulären TiO₂-Sols wurden 2,1 g Tetraisopropylorthotitanat zu einem Gemisch von Isopropanol, 0,981 g konz. HCl (37 Gew.-% in Wasser) und 0,105 g H₂O gegeben und es wurde 24 h bei 25°C gerührt. Danach wurden 2 g MPTS zu 200 g TiO₂-Sol gegeben und unter Rückfluß 5 h bei 50°C gerührt. Ein Teil des Isopropanols (10 g) wurde im Vakuum abdestilliert und 14 g 2-Isopropoxyethanol und der Photostarter UVI^{®} 6974 (Union Carbide) wurden dazugegeben. Alternativ kann anstelle von MPTS die gleiche Menge an GPTS eingesetzt werden.

### Beispiel 6: Herstellung der Beschichtungssystems

Applikation der Primerlösung

PC-Platten (Makrolon 3103) der Größe 10 x 10 cm² wurden als Substrat eingesetzt. Die Primerlösung (2 Gew.-% γ-Aminopropyltriethoxysilan in Isopropanol) wurde mittels Schleuderbeschichtung (Bedingungen: Auftragvolumen: 3 ml; Schleudergeschwindigkeit: 1500 U/min; Beschleunigung: 05; Dauer: 10 s) aufgetragen. Die Aushärtung erfolgt bei 130°C (30 min) im Umlufttrockenschrank.

### Applikation der harten Grundschicht

Nach der Applikation des Primers wurde ein Hartbeschichtungssystem auf Basis von hydrolysierbaren Epoxysilanen ebenfalls mittels Schleuderbeschichtung (Bedingungen: Auftragvolumen: 4 ml; Schleudergeschwindigkeit: 600 U/min; Beschleunigung: 05; Dauer 10 s) aufgetragen. Anschließend erfolgt ein Anhärten dieser Grundschicht bei 80°C (5 min) im Umlufttrockenschrank.

### Applikation der Deckschicht

Nachdem die Grundschicht aufgebracht worden war, wurde ein Beschichtungssol für die Deckschicht ebenfalls mittels Schleuderbeschichtung aufgetragen (Bedingungen: Auftragvolumen: 3 ml; Schleudergeschwindigkeit: 1500 U/min; Beschleunigung: 05; Dauer 10 s). Anschließend erfolgte der Aushärtevorgang. Dieser wurde bei 130°C (2 h) im Umlufttrockenschrank durchgeführt.

### Charakterisierung der Schichten

Man erhält Schichtsysteme, deren Haftung nach Gitterschnitt-/Tapetest (DIN 53151 bzw. DIN 58196-K2) sehr gut ist (GT/TT = 0/0). Der Streulichtverlust nach 1000 Zyklen Taber Abraser Test (DIN 52347 / Abriebräder CS-10F / Last 2 x 500 g / Höhe Saugrüssel: 3mm) beträgt zwischen 1 und 3%. (Diese Werte beziehen sich auf verschiedene Proben, die von verschiedenen Personen an verschiedenen Tagen hergestellt wurden, um eine statistische Absicherung zu erhalten). Die Schichtdicke (trocken) der aufgebrachten Hartschicht beträgt etwa 5 µm. Die Schichtdicke (trocken) der Deckschichten, gemessen mit einem Profilometer, beträgt ungefähr 200 bis 300 nm.

Die Messung der Diffusionsraten erfolgte mit einem Permatran-W 3/31 der Fa. Mocon bei 25°C und 100% relativer Luftfeuchtigkeit. Die Diffusionsraten von Wasserdampf liegen z.T. bis zu 20% unter den Diffusionsraten der nicht beschichteten Folien.

## Patentansprüche

1. Kunststoffsubstrat mit einem abriebfesten Diffusionssperrschichtsystem, umfassend
eine harte Grundschicht, die eine Beschichtungszusammensetzung auf Basis von thermisch oder photochemisch zu einem Polymer härtbaren oder polymerisierbaren Verbindungen enthält, und
eine Deckschicht, die erhältlich ist durch Auftragen einer nanoskalige Sol- und/oder Feststoffteilchen enthaltenden Masse auf die noch reaktive Oberflächengruppen aufweisende Grundschicht und anschließende Wärmebehandlung oder Härtung.

2. Kunststoffsubstrat nach Anspruch 1, **dadurch gekennzeichnet, dass** die Grundschicht eine Trockenschichtdicke von 1 bis 50 µm aufweist.

3. Kunststoffsubstrat nach Anspruch 1 oder 2, **dadurch gekennzeichnet, dass** auf die Deckschicht eine oder mehrere weitere Deckschichten aufgebracht sind.

4. Kunststoffsubstrat nach einem der Ansprüche 1 bis 3, **dadurch gekennzeichnet, dass** die oder jede Deckschicht eine Trockenschichtdicke von 100 bis 1000 nm aufweist.

5. Kunststoffsubstrat nach einem der Ansprüche 1 bis 4, **dadurch gekennzeichnet, dass** die Deckschicht aus nanoskaligen anorganischen Sol- und/oder Feststoffteilchen hergestellt worden ist, die polymerisierbare und/oder polykondensierbare Oberffächengruppen aufweisen.

6. Kunststoffsubstrat nach einem der Ansprüche 1 bis 5, **dadurch gekennzeichnet, dass** die Beschichtungszusammensetzung für die Grundschicht ein nach dem Sol-Gel-Verfahren erhaltenes Polykondensat aus
(A) einem oder mehreren Silanen der allgemeinen Formel (I)
RₐSiX₍₄₋ₐ₎ (I)
worin die Reste R gleich oder verschieden sind und nicht hydrolysierbare Gruppen darstellen, die Reste X gleich oder verschieden sind und hydrolysierbare Gruppen oder Hydroxylgruppen bedeuten und a den Wert 0, 1, 2 oder 3 hat, wobei bei mindestens 40 Stoffmengen-% der Silane a größer 0 ist, oder einem davon abgeleiteten Oligomer, und
(B) gegebenenfalls einer oder mehreren Verbindungen von Glas- oder Keramik-bildenden Elementen
umfasst.

7. Kunststoffsubstrat nach einem der Ansprüche 1 bis 6, **dadurch gekennzeichnet, dass** die Beschichtungszusammensetzung für die Grundschicht ein nach dem Sol-Gel-Verfahren erhaltenes Polykondensat auf Basis von mindestens einem Silan, das an einem nicht hydrolysierbaren Substituenten eine Epoxidgruppe aufweist, und gegebenenfalls einen Härtungskatalysator, ausgewählt aus Lewis-Basen und Alkoholaten von Titan, Zirkon oder Aluminium, umfasst.

8. Verfahren zur Herstellung eines Kunststoffsubstrats mit einem abriebfesten Diffusionssperrschichtsystem, **dadurch gekennzeichnet, dass** man auf das Substrat
a) eine Beschichtungszusammensetzung auf Basis von thermisch oder photochemisch zu einem Polymer härtbaren oder polymerisierbaren Verbindungen aufbringt und unter solchen Bedingungen härtet oder polymerisiert sowie gegebenenfalls nachbehandelt, dass noch reaktive Oberflächengruppen vorhanden sind, und auf diese Grundschicht
b) eine nanoskalige Sol- und/oder Feststoffteilchen enthaltende Masse aufbringt und zu einer Deckschicht härtet oder wärmebehandelt.

9. Verfahren nach Anspruch 8, **dadurch gekennzeichnet, dass** man das Substrat vor Aufbringen der Grundschicht mit einem Primer behandelt.

10. Verfahren nach Anspruch 8 oder 9, **dadurch gekennzeichnet, dass** die Grundschicht nach dem Auftragen bei einer Temperatur von nicht über 100 °C getrocknet wird.

11. Verfahren nach einem der Ansprüche 8 bis 10, **dadurch gekennzeichnet, dass** man die Deckschicht thermisch oder photochemisch härtet.

## Claims

1. Plastics substrate having an abrasion-resistant diffusion barrier coat system comprising
a hard basecoat comprising a coating composition based on compounds which are polymerizable or curable thermally or photochemically to form a polymer, and
a topcoat obtainable by applying a composition comprising nanoscale sol particles and/or particulate solids to the basecoat, still containing reactive surface groups, and then carrying out heat treatment or curing.

2. Plastics substrate according to Claim 1, **characterized in that** the basecoat has a dry film thickness of from 1 to 50 µm.

3. Plastics substrate according to Claim 1 or 2, **characterized in that** one or more further topcoats are applied to the topcoat.

4. Plastics substrate according to one of Claims 1 to 3, **characterized in that** the topcoat or each topcoat has a dry film thickness of from 100 to 1000 nm.

5. Plastics substrate according to one of Claims 1 to 4, **characterized in that** the topcoat has been prepared from nanoscale inorganic sol particles and/or particulate solids which have polymerizable and/or polycondensable surface groups.

6. Plastics substrate according to one of Claims 1 to 5, **characterized in that** the coating composition for the basecoat is a polycondensate obtained by the sol-gel process and comprising
(A) one or more silanes of the general formula (I)
RₐSiX₍₄₋ₐ₎ (I)
in which the radicals R are identical or different and are non-hydrolysable groups, the radicals X are identical or different and are hydrolysable groups or hydroxyl groups and a is 0, 1, 2 or 3, a being greater than 0 for at least 40 mol% of the silanes, or an oligomer derived therefrom, and
(B) if desired, one or more compounds of glass-forming or ceramic-forming elements.

7. Plastics substrate according to one of Claims 1 to 6, **characterized in that** the coating composition for the basecoat is a polycondensate obtained by the sol-gel process and based on at least one silane having an epoxide group on a non-hydrolysable substituent and, if desired, comprising a curing catalyst selected from Lewis bases and alkoxides of titanium, zirconium or aluminium.

8. Process for preparing a plastics substrate with an abrasion-resistant diffusion barrier coat system, **characterized in that**
a) a coating composition based on compounds which are polymerizable or curable thermally or photochemically to form a polymer is applied to the substrate and is cured or polymerized and also, where appropriate, aftertreated under conditions such that there are still reactive surface groups present, and
b) a composition comprising nanoscale sol particles and/or particulate solids is applied to this basecoat and is cured or heat-treated to form a topcoat.

9. Process according to Claim 8, **characterized in that** the substrate is treated with a primer before the basecoat is applied.

10. Process according to Claim 8 or 9, **characterized in that** the basecoat, following application, is dried at a temperature of not more than 100°C.

11. Process according to one of Claims 8 to 10, **characterized in that** the topcoat is cured photochemically or thermally.

## Revendications

1. Substrat de matériau synthétique, doté d'un système de couches faisant barrière à la diffusion, comprenant :
- une couche de fond, dure, qui contient une composition d'enduction à base de composés que l'on peut faire durcir ou polymériser, par voie thermique ou photochimique, en un polymère,
- et une couche de couverture, que l'on peut former en déposant, sur la couche de fond présentant à sa surface des groupes encore réactifs, une matière contenant un nanosol et/ou des nanoparticules solides, et en opérant ensuite un traitement thermique ou un durcissement.

2. Substrat de matériau synthétique, conforme à la revendication 1, **caractérisé en ce que** la couche de fond est épaisse, à sec, de 1 à 50 µm.

3. Substrat de matériau synthétique, conforme à la revendication 1 ou 2, **caractérisé en ce qu'**il y a, sur la couche de couverture, une ou plusieurs autres couches de couverture déposées par-dessus.

4. Substrat de matériau synthétique, conforme à l'une des revendications 1 à 3, **caractérisé en ce que** la couche de couverture, ou chacune des couches de couverture, est épaisse, à sec, de 100 à 1000 nm.

5. Substrat de matériau synthétique, conforme à l'une des revendications 1 à 4, **caractérisé en ce que** la couche de couverture a été formée à partir d'un nanosol inorganique ou de nanoparticules solides inorganiques présentant, en surface, des groupes pouvant donner lieu à une polymérisation et/ou à une polycondensation.

6. Substrat de matériau synthétique, conforme à l'une des revendications 1 à 5, **caractérisé en ce que** la composition d'enduction formant la couche de fond comprend un polycondensat obtenu, selon le procédé sol-gel, à partir
A) d'un ou plusieurs silanes de formule générale (I)
RₐSiX₍₄₋ₐ₎ (I)
dans laquelle les restes symbolisés par R sont des groupes non hydrolysables, identiques ou différents, les restes symbolisés par X sont identiques ou différents et sont des groupes hydroxyle ou des groupes hydrolysables, et a représente un nombre valant 0, 1, 2 ou 3, qui est supérieur à 0 chez au moins 40 % de la quantité de silane(s),
ou d'un oligomère qui en dérive,
B) et le cas échéant, d'un ou plusieurs composés d'éléments donnant des verres ou des céramiques.

7. Substrat de matériau synthétique, conforme à l'une des revendications 1 à 6, **caractérisé en ce que** la composition d'enduction formant la couche de fond comprend un polycondensat obtenu, selon le procédé sol-gel, à partir d'au moins un silane comportant un groupe époxy attaché à un substituant non-hydrolysable, et le cas échéant, un catalyseur de durcissement choisi parmi les bases de Lewis et les alcoolates de titane, de zirconium ou d'aluminium.

8. Procédé de fabrication d'un substrat de matériau synthétique doté d'un système de couches faisant barrière à la diffusion, **caractérisé en ce que** :
a) l'on dépose sur le substrat une composition d'enduction à base de composés que l'on peut faire durcir ou polymériser, par voie thermique ou photochimique, en un polymère, et l'on fait durcir ou polymériser cette composition, et on lui fait éventuellement subir un traitement ultérieur, tout ceci dans des conditions telles qu'il reste encore des groupes réactifs à sa surface,
b) et l'on dépose, sur la couche de fond ainsi obtenue, une matière contenant un nanosol et/ou des nanoparticules solides, que l'on soumet à un traitement thermique ou que l'on fait durcir pour en faire une couche de couverture.

9. Procédé conforme à la revendication 8, **caractérisé en ce que**, avant de déposer la couche de fond, on traite le substrat avec un primaire.

10. Procédé conforme à la revendication 8 ou 9, **caractérisé en ce que**, après avoir déposée la couche de fond, on la fait sécher à une température d'au plus 100 °C.

11. Procédé conforme à l'une des revendications 8 à 10, **caractérisé en ce que** l'on fait durcir la couche de couverture par voie thermique ou photochimique.
